# EUROPEAN PATENT APPLICATION

(11) **EP 2 031 588 A1**
(43) Date of publication of application: **04.03.2009**
(21) Application number: 08012305.2
(22) Date of filing: 08.07.2008
(51) Int. Cl.: G11B 7/24, B41M 5/26

(54) **Optical information recording medium and recording film for optical information recording medium**

(30) Priority: 31.08.2007 JP 2007226377
(71) Applicant: Kabushiki Kaisha Kobe Seiko Sho, Chuo-ku Kobe-shi Hyogo 651-8585 (JP)
(72) Inventor: Fujii, Hideo, Kobe-shi Hyogo 651-2271 (JP); Kakiuchi, Hironori, Kobe-shi Hyogo 651-2271 (JP); Jiko, Norihiro, Kobe-shi Hyogo 651-2271 (JP); Kishi, Tomoya, Kobe-shi Hyogo 651-2271 (JP)
(74) Representative: Müller-Boré & Partner Patentanwälte

(57) **Abstract**

Disclosed herein is an optical information recording medium and a recording film for the optical information recording medium, which are capable of readout of short recording marks at a higher C/N ratio than the conventional BD (as in the case of the Super-RENS disk) by means of the same readout power as for the conventional BD, which is lower than that for the Super-RENS disk (or the conventional BD). To be specific, the readout power is 0.3 mW, the short recording marks have a length of 149 nm, and the C/N ratio is no less than 45 dB.

The recording film is capable of information recording and reading out to and from recording marks upon irradiation with a laser beam having a wavelength of 380-450 nm, the recording marks including short recording marks having a recording length no longer than 149 nm, and has a refractive index of 1.8-2.5 and an extinction coefficient of 2.3-2.9 both for a laser beam having a wavelength of 380-450 nm. The optical information recording medium is provided with the recording film.

## Description

The present invention belongs to the technical field relating to an optical information recording medium and a recording film for an optical information recording medium. More particularly, the present invention belongs to the technical field relating to an optical information recording medium and a recording film for an optical information recording medium, the former being designed to record information by forming recording marks (including those no longer than 149 nm) in the latter by means of a laser beam (with a wavelength of 380-450 nm) directed thereto and to read out information by means of the recording marks.

Incidentally, the term "to record information by forming recording marks" may be shortened to "to form recording marks", and the term "to read out information by means of the recording marks" may be shortened to "to read out recording marks".

Ordinary optical information recording media do not always read out recording marks consistently by means of an optical beam. That is, read out signals decrease in amplitude as the recording marks become shorter, and the amplitude reaches zero at the limit of the optical resolving power. This problem involved in a commercial BD (Blu-ray disk) is avoided by using a limit equalizer which doubles the amplitude of the shortest recording mark while limiting the amplitude of long recording marks.

On the other hand, attempts to break the limit of the optical resolving power have born fruit as the optical disk of Super-RENS (Super-Resolution Near-field Structure), which is an optical information recording medium with a high linear recording density. (See Denshi Jouhou Tsushin Gakkaishi (Journal of the Society of Electronic Information and Communications), vol. 89, No. 11, 2006, pp. 1000-1006; Japanese Patent Laid-open No. 2005-25841, and Japanese Patent Laid-open No. 2005-25842.) The two patent documents mentioned above disclose Super-RENS disks in which recording marks are formed through decomposition of noble metal oxides such as PtOₓ.

Unfortunately, the Super-RENS disk mentioned above requires a higher readout power than the conventional BD. For example, the Super-RENS disk disclosed in Japanese Patent Laid-open No. 2005-25842 requires a readout power of 2.4 mW, which is greater than that of the conventional BD (0.3-1.0 mW), although it achieves a practical C/N (carrier/noise) ratio as high as 45 dB during readout of recording marks with a recording mark length of 160 nm when it has an optimized disk structure with a laser beam having a wavelength of 405 nm and an objective lens (for laser condensation) having a numerical aperture (NA) of 0.85.

### Patent Document 1:

Japanese Patent Laid-open No. 2005-25841

### Patent Document 2:

Japanese Patent Laid-open No. 2005-25842

The present invention was completed in view of the foregoing. It is an object of the present invention to provide an optical information recording medium and a recording film for the optical information recording medium, which are capable of readout of short recording marks at a higher C/N ratio than the conventional BD (as in the case of the Super-RENS disk mentioned above) by means of the same readout power as for the conventional BD, which is lower than that for the Super-RENS disk mentioned above (or the one disclosed in Patent Documents listed above). To be specific, the readout power is 0.3 mW, the short recording marks have a length of 149 nm, and the C/N ratio is higher than 45 dB.

To achieve the foregoing object, the present inventors carried out a series of researches which led to the present invention.

The present invention, which was completed to achieve the foregoing object, is concerned with an optical information recording medium and a recording film for the optical information recording medium. The present invention contains the first aspect which covers an optical information recording medium, the second aspect which covers a recording film, the third aspect which covers another information recording medium, and the fourth aspect which covers another recording film.

The first aspect of the present invention resides in an optical information recording medium to form recording marks in a recording film for information recording and to read out recorded information by means of the recording marks upon irradiation with a laser beam having a wavelength of 380-450 nm, the recording marks including short recording marks having a recording length no longer than 149 nm, wherein the recording film has a refractive index of 1.8-2.5 and an extinction coefficient of 2.3-2.9 both for a laser beam having a wavelength of 380-450 nm.

The second aspect of the present invention resides in a recording film to form recording marks therein for information recording and to read out recorded information by means of the recording marks upon irradiation with a laser beam having a wavelength of 380-450 nm, the recording marks including short recording marks having a recording length no longer than 149 nm, wherein the recording film has a refractive index of 1.8-2.5 and an extinction coefficient of 2.3-2.9 both for a laser beam having a wavelength of 380-450 nm.

The third aspect of the present invention resides in the optical information recording medium as defined in the first aspect, wherein the recording film is made of an alloy containing at least one species of In, Bi, and Sn in an amount no less than 40 atom% in total and at least one species of Co and Ni in an amount of 10-60 atom% in total.

The fourth aspect of the present invention resides in the recording film as defined in the second aspect, which is made of an alloy containing at least one species of In, Bi, and Sn in an amount no less than 40 atom% in total and at least one species of Co and Ni in an amount of 10-60 atom% in total.

The optical information recording medium according to the present invention is capable of reading out information from short recording marks with a lower readout power than the above-mentioned Super-RENS disk (disclosed in the above-mentioned patent documents) at a C/N ratio (greater than that of the conventional BD) as in the case of the above-mentioned Super-RENS disk. To be specific, the readout power is 0.3 mW, the short recording marks have a length of 149 nm, and the C/N ratio is greater than 45 dB.

The recording film for an optical information recording medium according to the present invention constitutes a component of the optical information recording medium according to the present invention. It is capable of reading out information from short recording marks with a lower readout power than the above-mentioned Super-RENS disk (disclosed in the above-mentioned patent documents) at a C/N ratio (greater than that of the conventional BD) as in the case of the above-mentioned Super-RENS disk. To be specific, the readout power is 0.3 mW, the short recording marks have a length of 149 nm, and the C/N ratio is greater than 45 dB.

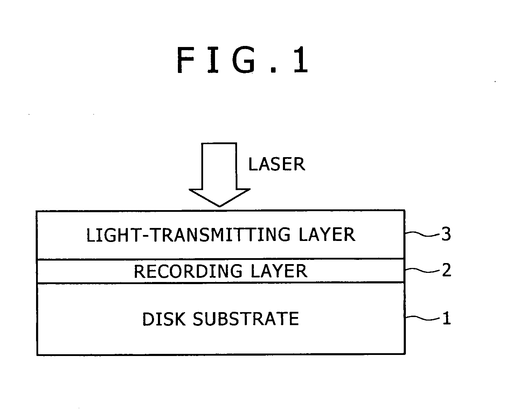

Fig. 1 is a schematic diagram showing the structure of the optical information recording medium (optical disk) pertaining to Example and Comparative Example of the present invention.

In order to achieve the above-mentioned object, the present inventors carried out a series of researches to find that an optical information recording medium to form recording marks in a recording film for information recording and to read out recorded information by means of the recording marks upon irradiation with a laser beam having a wavelength of 380-450 nm, the recording marks including short recording marks having a recording length no longer than 149 nm, is capable of reading out recorded information from short recording marks at a lower readout power than that in the case of the above-mentioned Super-RENS disk (or equal to that in the case of conventional BD) with a C/N ratio equal to that in the case of the above-mentioned Super-RENS disk (or greater than that in the case of conventional BD), if the above-mentioned recording film has the optical characteristics defined in (1) and (2) below. To be specific, the readout power is 0.3 mW, the short recording marks correspond to 2T marks which are the shortest recording marks for conventional BD), and the C/N ratio is no less than 45 dB.

(1) The refractive index is 1.8-2.5 for a laser beam having a wavelength of 380-450 nm.
(2) The extinction coefficient is 2.3-2.9 for a laser beam having a wavelength of 380-450 nm.

The present invention was completed on the basis of the foregoing finding, and it relates to an optical information recording medium and a recording film for the optical information recording medium. The optical information recording medium according to the first aspect of the present invention is so designed as to form recording marks in the recording film thereof, thereby recording information, and to read out recorded information by means of the recording marks, upon irradiation with a laser beam having a wavelength of 380-450 nm. The recording marks include short recording marks having a length no longer than 149 nm. The above-mentioned recording film is characterized by having a refractive index of 1.8-2.5 for a laser beam having a wavelength of 380-450 nm and also by having an extinction coefficient of 2.3-2.9 for a laser beam having a wavelength of 380-450 nm. The recording film for an optical information recording medium according to the second aspect of the present invention is so designed as to form recording marks therein, thereby recording information, and to read out recorded information by means of the recording marks, upon irradiation with a laser beam having a wavelength of 380-450 nm. The recording marks include short recording marks having a length no longer than 149 nm. The recording film is characterized by having a refractive index of 1.8-2.5 for a laser beam having a wavelength of 380-450 nm and also by having an extinction coefficient of 2.3-2.9 for a laser beam having a wavelength of 380-450 nm.

It is apparent from the above-mentioned finding that the information recording medium according to the present invention is capable of reading out information from the short recording marks by means of a readout power which is lower than that of the above-mentioned Super-RENS disk (or which is equal to that of the conventional BD). The C/N ratio at the time of readout is the same as that in the case of the above-mentioned Super-RENS disk (or higher than that of the conventional BD). To be specific, the readout power is 0.3 mW for readout of information from short recording marks having a length of 149 nm, and the C/N ratio for readout is greater than 45 dB. The optical information recording medium according to the present invention is capable of information readout with a lower readout power than necessary for the above-mentioned Super-RENS disk (disclosed in the above-mentioned patent document) or with a readout power equal to that for the conventional BD). Moreover, it is capable of information readout from short recording marks at a C/N ratio which is the same as that for the above-mentioned Super-RENS disk (or which is higher than that for the conventional BD). To be specific, the readout power is 0.3 mW and the C/N ratio is greater than 45 dB for readout of information from short recording marks having a length of 149 nm.

The recording film for an optical recording medium according to the present invention constitutes a component of the optical recording medium according to the present invention. It is capable of reading out information from the short recording marks by means of a readout power which is lower than that of the above-mentioned Super-RENS disk (disclosed in the above-mentioned patent document) (or which is equal to that of the conventional BD). The C/N ratio at the time of readout is the same as that in the case of the above-mentioned Super-RENS disk (or higher than that of the conventional BD). To be specific, the readout power is 0.3 mW for readout of information from short recording marks having a length of 149 nm, and the C/N ratio for readout is no less than 45 dB.

The optical information recording medium according to the present invention is irradiated with a laser beam having a wavelength of 380-450 nm for recording and readout of information by means of recording marks. In other words, the laser beam for irradiation should have a wavelength of 380-450 nm for the reasons given below. A laser beam with a short wavelength is effective for recording and reading out information by means of short recording marks. In fact, a laser beam with a wavelength of 405 nm is in practical use for BD. A laser beam with a wavelength shorter than 380 nm is hardly available and hence unpractical, and a laser beam with a wavelength longer than 450 nm is not suitable for short recording marks on account of its large beam diameter.

The optical information recording medium according to the present invention should have a refractive index of 1.8-2.5 for a laser beam having a wavelength of 380-450 nm. An optical disk is required to have a specific refractive index for stable servo characteristics because a particular track is focused by means of a return beam for the servo mechanism. It is easy to raise the refractive index by increasing the film thickness only from the standpoint of servo characteristics. However, increasing the film thickness increases the volume to be melted in the case where recording is to be accomplished by perforation, and this gives rise to residues in the recording marks. To avoid this problem, the refractive index should preferably be no smaller than 1.8. With a refractive index smaller than 1.8, the recording film having a thickness of ten-odd nm does not provide sufficient reflection, and this is not desirable for stable servo characteristics. With a refractive index in excess of 2.5, the recording film having a thickness of ten-odd nm tends to give rise to residues in the recording marks, which leads to more noises and low C/N ratios. For the reasons mentioned above, the optical information recording medium according to the present invention should have a refractive index of 1.8-2.5 for a laser beam having a wavelength of 380-450 nm. The refractive index is specified for a laser beam having a wavelength of 380-450 nm because the laser beam to be directed to the recording film has a wavelength of 380-450 nm.

The recording film contained in the optical information recording medium according to the present invention should have an extinction coefficient of 2.3-2.9 for a laser beam having a wavelength of 380-450 nm. The extinction coefficient (k) and wavelength (λ) are related with the absorption coefficient (A) by A = 4πk/λ, assuming that the intensity of the laser beam decreases exponentially according to Beer's law in the substance being heated by the laser beam. The reciprocal of the absorption coefficient is the penetration depth (d) at which the intensity of the laser beam becomes 1/A). This is expressed by d = 1/A = λ/4πk. As k decreases, d becomes longer, and as k increases, d becomes shorter. It is important that the short recording marks be heated instantaneously in the direction of film thickness by the laser bean having a pulse length of 10-20 nsec. A recording film with an extinction coefficient smaller than 2.3 permits the laser beam to penetrate deep, which results in the substrate also being heated and damaged (with surface melting). A recording film with an extinction coefficient larger than 2.9 permits the laser beam to penetrate only short, with the result that the surface side of the recording film melts but the substrate side does not melt completely. This leads to a low C/N ratio. Thus, the recording film contained in the optical information recording medium according to the present invention should have an extinction coefficient of 2.3-2.9 for a laser beam having a wavelength of 380-450 nm. The extinction coefficient is specified for a laser beam having a wavelength of 380-450 nm because the laser beam to be directed to the recording film has a wavelength of 380-450 nm. The recording film having an extinction coefficient of 2.6-2.9 (for a laser beam having a wavelength of 380-450 nm) permits recording marks to be formed with a very little residues in the film down to a depth of ten-odd nm.

The recording film in the optical information recording medium according to the present invention should preferably be made of an alloy containing at least one species of In, Bi, and Sn in an amount no less than 40 atom% in total and at least one species of Co and Ni in an amount of 10-60 atom% in total (as defined in the third and fourth aspects of the present invention). The alloy specified above causes Co and Ni to concentrate in the interface close to the substrate, so that the recording film has the desired optical constants (i.e., a refractive index of 1.8-2.5 for a laser beam having a wavelength of 380-450 nm, and an extinction coefficient of 2.3-2.9 for a laser beam having a wavelength of 380-450 nm). In other words, it materializes the optical information recording medium according to the present invention. It may also contain optional elements such as Si and Ge to adjust (increase) the extinction coefficient. It may also contain rare earth elements to improve durability. The alloy from which the recording film is made should contain at least one species of In, Bi, and Sn in a specific amount and at least one species of Co and Ni in a specific amount. The total amount of In, Bi, and Sn should be no less than 40 atom% in total. Otherwise, the content of low-melting metals (In, Bi, and Sn) decreases, which makes the recording film consume more recording power. The total amount of Co and Ni should be no less than 10 atom% in total. Otherwise, the recording film is poor in surface smoothness, which leads to a high noise level and a low C/N ratio. The total amount of Co and Ni should be no more than 60 atom%. Otherwise, the content of high-melting metals (Co and Ni) increases, which makes the recording film consume more recording power.

The present invention requires that the recording film have a refractive index of 1.8-2.5 and an extinction coefficient of 2.3-2.9 both for a laser beam having a wavelength of 380-450 nm. The recording film thus specified can be obtained by adjusting its composition, thickness, and film-forming conditions. For example, a recording film will have a refractive index of 2.22 and an extinction coefficient of 2.79 both for a laser beam having a wavelength of 405 nm, if it is produced by sputtering under the condition that the target is pure In with a Co chip placed thereon, the sputtering power is 100 W, and the sputtering gas (Ar) pressure is 3 mTorr. A recording film produced at a reduced sputtering power (50 W) has a refractive index of 2.45 and an extinction coefficient of 1.78 both for a laser beam having a wavelength of 405 nm. It does not accord with the present invention. A recording film produced at a reduced sputtering power (25 W) has a refractive index of 2.39 and an extinction coefficient of 1.21 both for a laser beam having a wavelength of 405 nm. It does not accord with the present invention.

The present invention requires that short recording marks with a mark length shorter than 149 should always be formed, with their number being not restricted. Short recording marks may also be formed together with recording marks with a mark length longer than 149 nm.

### EXAMPLES

The invention will be described with reference to Examples and Comparative Examples that follow. These examples may be modified adequately within the scope of the invention.

### Example 1

The optical information recording medium (optical disk) pertaining to Example 1 has a structure as shown in Fig. 1. It was prepared in the following manner.

First, the disk substrate 1, which is a polycarbonate sheet, 1.1 mm thick, having a track pitch of 0.32 µm, a groove width of 0.16 µm, and a groove depth of 25 nm, is coated by DC sputtering (under the conditions shown below) with the metal thin film 2 (as the recording film) which has the composition shown in Table 1 (determined by ICP analysis).
Target for sputtering: pure In or pure Sn, with a metal chip of Co, Ni, or Bi placed thereon.
Ultimate pressure: lower than 10⁻⁵ Torr (1 Torr = 133.3 Pa) Total pressure of sputtering gas: 3 mTorr
DC sputtering power: 25 to 100 W (as shown in Table 1).
The recording layer (recording film) varies in thickness as shown in Table 1.

The recording layer 2 was spin-coated with a UV-curable resin ("BRD-130" from NIPPON KAYAKU CO., LTD.). Upon curing, the resin layer turned into the light transmitting layer 3 having a thickness of 100 ± 15 µm. Thus there was obtained the optical disk.

On the other hand, the glass substrate was coated with a metal thin film in the same way as the above-mentioned recording layer 2. Thus there was obtained a sample to examine the metal thin film for optical characteristics. The metal thin film of the sample was tested for refractive index and extinction coefficient by using a high-speed spectral ellipsometer ("M-2000U" from J. A. Woollam Japan Corporation). The thus determined refractive index and extinction coefficient were regarded as those of the recording layer 2 of the above-mentioned optical disk.

Recording and readout of signals to and from recording marks were performed on the optical disk mentioned above, and the C/N ratio at the time of readout was measured in the following manner.

Short recording marks, 149 nm long (or 2T marks equivalent to the shortest marks of the conventional BD) were formed repeatedly at a linear speed of 4.9 m/s with a laser power (or recording power) of 4-12 mW as shown in Table 1, by using an optical disk evaluating apparatus ("ODU-1000" from PULSTEC INDUSTRIAL CO., LTD.) and a digital oscilloscope ("DL1640L" from YOKOGAWA ELECTRIC CORPORATION). The former generates recording laser with wavelength of 405 nm and is equipped with an object lens having a numeral aperture (NA) of 0.85. Subsequently, signals from the short recording marks were read out (for signal read-out) with a laser power (readout power) of 0.3 mW. At the time of signal readout, the signal intensity at a frequency of 16.5 MHz was regarded as carrier (in terms dB) and signal intensity at a frequency of 16.0 - 17.0 MHz was regarded as noise (in terms of dB). Thus, the carrier/noise (C/N) ratio (in terms of dB) was obtained. Incidentally, the same laser beam having a wavelength of 405 nm was used for irradiation to form the short recording marks and to read out signals from them.

Table 1 shows the results of measurement of the C/N ratio and the results of measurement of refractive index and extinction coefficient of the recording film 2. Incidentally, the refractive index was measured with a laser beam having a wavelength of 405 nm, and the extinction coefficient was measured with a laser beam having a wavelength of 405 nm. Table 1 also shows the reflected signal level (or the maximum amplitude of SUM2 signals) of the optical disk in its unrecorded state. The C/N ratio was rated according to the following criterion.
Lower than 45 dB : × (poor)
No lower than 45 dB and lower than 50 dB : ○ (good)
No lower than 50 dB : ⊚ (excellent)
This criterion was established in view of the fact that the commercial BD-R has a C/N ratio of about 42-43 dB for 2T signals, whereas the present invention is intended to achieve a higher C/N ratio than that of the conventional BD.

It is noted from Table 1 that samples Nos. 14 to 22 (in Comparative Examples) are rated as poor (x) because they have a low C/N ratio at the time of readout from the short recording marks (with a length of 149 nm) on the optical disk regardless of whether the recording disk 2 of the optical disk has a refractive index outside the specified values of 1.8-2.5 for a laser beam having a wavelength of 405 nm, or the recording disk 2 of the optical disk has an extinction coefficient outside the specified values of 2.3-2.9 for a laser beam having a wavelength of 405 nm, or the recording disk 2 of the optical disk has a refractive index outside the specified values of 1.8-2.5 for a laser beam having a wavelength of 405 nm and also has an extinction coefficient outside the specified values of 2.3-2.9 for a laser beam having a wavelength of 405 nm.

By contrast, samples Nos. 1 to 13 (in Examples) are rated as good (○) or excellent (⊚) because they have a high C/N ratio at the time of readout from the short recording marks (with a length of 149 nm) on the optical disk as evidenced by the fact that the recording disk 2 of the optical disk has a refractive index of 1.8-2.5 for a laser beam having a wavelength of 405 nm and has an extinction coefficient of 2.3-2.9 for a laser beam having a wavelength of 405 nm.

Thus, it turned out that a high C/N ratio is achieved at the time of readout from the short recording marks if the refractive index is 1.8-2.5 and the extinction coefficient is 2.3-2.9. A presumable mechanism for this is as follows. If the refractive index is 1.8-2.5 and the extinction coefficient is 2.3-2.9, there exists a stable balance between energy to convert light into heat and energy to melt the recording film, and this leads to neat short recording marks with few residues remaining therein. The result is a high C/N ratio at the time of readout from the short recording marks.

Incidentally, the commercial BD-R has a C/N ratio of about 42-43 dB at the time of readout from 2T marks (short recording marks with a length of 149 nm), whereas the optical disks (Nos. 1 to 13) pertaining to Examples of the present invention have a C/N ratio of 47.9-52.0 dB at the time of readout from the short recording marks (with a length of 149 nm). There is a difference of about 5-10 dB between them. This suggests the possibility of increasing the linear recording density (or the possibility of employing shorter recording marks for recording and reading out).

### Example 2

This example is intended to measure the C/N ratio for short recording marks longer than those in Example 1. A detailed description follows.

An optical disk having the structure shown in Fig. 1 was prepared in the following manner.

First, the disk substrate 1, which is a polycarbonate sheet, 1.1 mm thick, having a track pitch of 0.32 µm, a groove width of 0.16 µm, and a groove depth of 25 nm, is coated by DC sputtering (under the conditions shown below) with the metal thin film 2 of an alloy having a composition of In-47.1Co-1.8Sn.
Target for sputtering: pure In or pure Sn, with a Co chip placed thereon.
Ultimate pressure: not higher than 10⁻⁵ Torr
Total pressure of sputtering gas: 3 mTorr
DC sputtering power: 100 W
The recording layer 2 has a thickness of 12 nm.

The recording layer 2 was spin-coated with a UV-curable resin ("BRD-130" from NIPPON KAYAKU CO., LTD.). Upon curing, the resin layer turned into the light-transmitting layer 3 having a thickness of 100 ± 15 µm. Thus there was obtained the optical disk pertaining to Example 2 of the present invention.

On the other hand, the glass substrate was coated with a metal thin film of In-47.1Co-1.8Sn, which is the same one as the recording layer mentioned above. Thus there was obtained a sample to examine the metal thin film for optical characteristics. The metal thin film of the sample was tested for refractive index and extinction coefficient in the same way as in Example 1. The thus determined refractive index and extinction coefficient were regarded as those of the recording layer 2 of the above-mentioned optical disk. The refractive index was 2.40 and the extinction coefficient was 2.84 both for a laser beam having a wavelength of 405 nm.

Recording and readout of signals to and from recording marks were performed on the optical disk mentioned above, and the C/N ratio at the time of readout was measured in the following manner.

Short recording marks varying in length from 99 to 149 nm were formed repeatedly at a linear speed of 4.9 m/s with a laser power (recording power) of 6 to 7 mW as shown in Table 2, by means of the same optical disk evaluating apparatus and digital oscilloscope as used in Example 1. Signals from the short recording marks were read out with a laser power (readout power) of 0.3-1 mW. At the time of signal readout, the signal intensity at frequencies of 16.5, 18.15, 19.8, 21,45, 23.1, and 24.75 MHz was regarded as carrier (in terms dB) and the signal intensity at frequencies in the neighborhood of each of the frequencies was regarded as noise (in terms of dB). Thus, there was obtained the carrier/noise (C/N) ratio (in terms of dB). Incidentally, the same laser beam having a wavelength of 405 nm was used for irradiation to form the short recording marks and to read out signals from them.

In Comparative Examples, a commercial optical disk ("25GB BD-R" from MITSUBISHI KAGAKU MEDIA CO., LTD., which is a Blu-ray Disk of bare type for double-speed recording, with a model number of VBR130N1), was also tested for C/N ratio by recording and readout to and from recording marks in the same way as in the optical disk pertaining to the above-mentioned example.

The C/N ratios measured and the readout power used are shown in Table 2 (for Examples) and Table 3 (for Comparative Examples with commercial 25GB BD-R). In Tables 2 and 3, the following symbols are used.
Pw (Write Power), Pe (Erase Power), Pb (Bias Power), and Pr (Readout Power).

It is apparent from Tables 2 and 3 that the optical disks pertaining to Examples are superior to those pertaining to Comparative Examples in C/N ratio involved in readout of short recording marks. For example, the C/N ratio in Examples is 37.3 dB and that in Comparative Examples is 21.5 dB at the time of readout of short recording marks (124 nm long) with a readout power (Pr) of 1 mW. A big difference between them should be noted. Although there is a report about a Super-RENS disk which has a high C/N ratio for short recording marks, this disk needs a high readout power (Pr > 2 mW), and at a readout power of 1 mW, it does not realize the high C/N ratio as the optical disk pertaining to Examples of the present invention.

It was proven that the optical disk pertaining to Examples of the present invention permits readout of short recording marks shorter than the limit of resolution which ranges from λ/4NA to 119 nm for the optical system in which it is used. Further improvement of characteristics would be possible by optimizing the composition and thickness of the recording film.

The foregoing suggests that the optical information recording medium according to the present invention would realize a high linear recording density exceeding that of the 25GB/layer of the conventional BD if it employs recording marks including short recording marks having a length no longer than 149 nm.

**Table 1**

| No. | Composition of recording film (atom%) | Sputtering power (W) | Refractive index (n) | Extinction coefficient (k) | Film thickness (nm) | SUM2 (mV) | Recording power (mW) | 2T C/N (dB) | Rating | Remarks |
|---|---|---|---|---|---|---|---|---|---|---|
| 1 | In-46.1Co-1.1Sn | 100 | 2.35 | 2.82 | 12 | 316 | 7 | 50.3 | ⊚ | Example |
| 2 | | 100 | 2.34 | 2.89 | 14 | 386 | 7 | 46.5 | ○ | Example |
| 3 | In-47.1Co-1.8Sn | 100 | 2.40 | 2.84 | 12 | 300 | 7 | 50.7 | ⊚ | Example |
| 4 | | 100 | 2.42 | 2.74 | 14 | 347 | 7 | 50.2 | ⊚ | Example |
| 5 | In-24Co-45Bi | 100 | 1.92 | 2.51 | 12 | 254 | 7 | 48.8 | ○ | Example |
| 6 | | 100 | 1.90 | 2.67 | 18 | 449 | 8 | 48.2 | ○ | Example |
| 7 | In-27Co-41Bi | 100 | 1.95 | 2.53 | 12 | 259 | 7 | 49.5 | ○ | Example |
| 8 | | 100 | 1.93 | 2.70 | 18 | 431 | 8 | 49.7 | ○ | Example |
| 9 | In-33Co-23Bi | 100 | 2.00 | 2.60 | 12 | 303 | 8 | 52.0 | ⊚ | Example |
| 10 | In-22Co | 100 | 1.96 | 2.38 | 12 | 209 | 8 | 47.9 | ○ | Example |
| 11 | In-41Co | 100 | 2.22 | 2.79 | 12 | 331 | 8 | 51.6 | ⊚ | Example |
| 12 | In-36Ni-15Sn | 100 | 2.25 | 2.43 | 15 | 335 | 9 | 48.3 | ○ | Example |
| 13 | | 100 | 2.31 | 2.44 | 18 | 378 | 9 | 48.2 | ○ | Example |
| 14 | In-47.8Co-3.9Sn | 100 | 2.53 | 3.04 | 12 | 419 | 7 | 36.6 | × | Comparative Example |
| 15 | | 100 | 2.58 | 3.09 | 14 | 475 | 8 | 38.4 | × | Comparative Example |
| 16 | In-33Co-23Bi | 100 | 1.97 | 2.94 | 18 | 547 | 9 | 35.7 | × | Comparative Example |
| 17 | In-41Co | 50 | 2.45 | 1.78 | 12 | 88 | 12 | 23.2 | × | Comparative Example |
| 18 | In-41Co | 25 | 2.39 | 1.21 | 12 | 60 | 8 | 31.0 | × | Comparative Example |
| 19 | In-23Co-41Au | 100 | 1.41 | 2.48 | 14 | 298 | 12 | 38.8 | × | Comparative Example |
| 20 | In-36Ni-15Sn | 100 | 2.33 | 2.22 | 12 | 219 | 12 | 37.6 | × | Comparative Example |
| 21 | Sn-30Co | 100 | 2.39 | 3.28 | 12 | 325 | 9 | 41.3 | × | Comparative Example |
| 22 | Sn-26Co-16Bi | 100 | 2.21 | 2.92 | 10 | 258 | 9 | 41.3 | × | Comparative Example |

| | | | | | | | | | | |
|---|---|---|---|---|---|---|---|---|---|---|
| (Note) Laser wavelength: 405 nm; numerical aperture: 0.85; linear speed: 4.92 m/s; readout power: 0.3 mW | | | | | | | | | | |

**Table 2**

| Clock | Signal frequency | Mark length (nm) | Pw (mW) | Pe (mW) | Pb (mW) | Pr (mW) | C/N (dB) | Noise (dB) | SUM2 (mV) |
|---|---|---|---|---|---|---|---|---|---|
| 66MHz | 16.5MHz | 149 | 6.0 | 3.0 | 1.0 | 0.3 | 47.2 | -71.3 | 210 |
| | | | | | | 0.7 | 49.6 | -65.8 | 518 |
| | | | | | | 1.0 | 50.5 | -63.3 | 764 |
| 72.6MHz (X1.1) | 18.15NHz | 136 | 7.0 | 2.5 | 0.1 | 0.3 | 41.7 | -73.1 | 162 |
| | | | | | | 0.7 | 45 | -68.2 | 394 |
| | | | | | | 1.0 | 47.1 | -66.4 | 568 |
| 792MHz (X1.2) | 19.8MHz | 124 | 7.0 | 2.5 | 0.1 | 0.3 | 25 | -74.7 | 150 |
| | | | | | | 0.7 | 32 | -71.6 | 365 |
| | | | | | | 1.0 | 37.3 | -71.3 | 532 |
| 85.8MHz (X1.3) | 21.45MHz | 115 | 7.0 | 2.0 | 0.1 | 0.3 | 7 | -73.8 | 192 |
| | | | | | | 0.7 | 21.5 | -69.6 | 460 |
| | | | | | | 1.0 | 27.2 | -70.2 | 708 |
| 92.4MHz (X1.4) | 23.1MHz | 106 | 7.0 | 2.0 | 0.1 | 0.3 | 3 | -73.6 | 201 |
| | | | | | | 0.7 | 17.5 | -70 | 476 |
| | | | | | | 1.0 | 20.3 | -70.2 | 706 |
| 99MHz (X1.5) | 24.75MHz | 99 | 7.0 | 2.0 | 0.1 | 0.3 | 2 | -73.3 | 196 |
| | | | | | | 0.7 | 13 | -70.2 | 486 |
| | | | | | | 1.0 | 16 | -70.7 | 714 |

| | | | | | | | | | |
|---|---|---|---|---|---|---|---|---|---|
| (Note) Examples, linear speed: 4.92 m/s | | | | | | | | | |

**Table 3**

| Clock | Signal frequency | Mark length (nm) | Pw (mW) | Pe (mW) | Pb (mW) | Pr (mW) | C/N (dB) | Noise (dB) | SUM2 (mV) |
|---|---|---|---|---|---|---|---|---|---|
| 66MHz | 16.5MHz | 149 | 5.0 | 1.5 | 0.1 | 0.3 | 46.1 | -73.1 | 207 |
| | | | | | | 0.7 | 51.1 | -70.7 | 490 |
| | | | | | | 1.0 | 52.1 | -68.7 | 710 |
| 72.6MHz (X1.1) | 18.15MHz | 136 | 5.0 | 1.5 | 0.1 | 0.3 | 36 | -73.1 | 214 |
| | | | | | | 0.7 | 41.5 | -71.3 | 492 |
| | | | | | | 1.0 | 42.3 | -69.3 | 706 |
| 79.2MHz (X1.2) | 19.8MHz | 124 | 5.5 | 1.5 | 0.1 | 0.3 | 16.8 | -74.4 | 172 |
| | | | | | | 0.7 | 21 | -73.1 | 396 |
| | | | | | | 1.0 | 21.5 | -71.8 | 568 |
| 85.8MHz (X1.3) | 21.45MHz | 115 | 5.5 | 1.5 | 0.1 | 0.3 | 2.8 | -74.4 | 172 |
| | | | | | | 0.7 | 14.5 | -72.9 | 396 |
| | | | | | | 1.0 | 18.2 | -71.8 | 560 |
| 92.4MHz (X1.4) | 23.1MHz | 106 | 5.5 | 1.5 | 0.1 | 0.3 | 1.5 | -74.2 | 172 |
| | | | | | | 0.7 | 10.2 | -72.7 | 408 |
| | | | | | | 1.0 | 15.7 | -72.4 | 584 |
| 99MHz (X1.5) | 24.75MHz | 99 | 5.5 | 1.5 | 0.1 | 0.3 | 1.2 | -74 | 172 |
| | | | | | | 0.7 | 7 | -72.4 | 408 |
| | | | | | | 1.0 | 10.2 | -71.8 | 584 |

| | | | | | | | | | |
|---|---|---|---|---|---|---|---|---|---|
| (Note) Comparative Examples (commercial 25GB BD-R), linear speed: 4.92 m/s | | | | | | | | | |

The optical information recording medium according to the present invention is capable of reading out signals from short recording marks with the same readout power as the conventional BD (which is lower than that for Super-RENS disk proposed so far) at a higher C/N ratio than the conventional BD (which is identical with that of Super-RENS disk proposed so far). Therefore, it is superior to the conventional BD in ability to read out short recording marks at a high C/N ratio. It is also superior to the conventionally proposed Super-RENS disk in ability to read out short recording marks with a lower readout power. The recording film according to the present invention is suitable for the optical information recording medium. It gives a higher C/N ratio than the conventional BD when short recording marks are read out from the optical information recording medium and it also permits readout with a lower readout power than the conventionally proposed Super-RENS disk.

### Fig. 1

- 1 ...: Disk substrate
- 2 ...: Recording layer
- 3 ...: Light-transmitting layer
- 4 ...: Laser

## Claims

1. An optical information recording medium to form recording marks in a recording film for information recording and to read out recorded information by means of said recording marks upon irradiation with a laser beam having a wavelength of 380-450 nm, said recording marks including short recording marks having a recording length no longer than 149 nm, wherein said recording film has a refractive index of 1.8-2.5 and an extinction coefficient of 2.3-2.9 both for a laser beam having a wavelength of 380-450 nm.

2. A recording film to form recording marks therein for information recording and to read out recorded information by means of said recording marks upon irradiation with a laser beam having a wavelength of 380-450 nm, said recording marks including short recording marks having a recording length no longer than 149 nm, wherein said recording film has a refractive index of 1.8-2.5 and an extinction coefficient of 2.3-2.9 both for a laser beam having a wavelength of 380-450 nm.

3. The optical information recording medium as defined in Claim 1, wherein the recording film is made of an alloy containing at least one species of In, Bi, and Sn in an amount no less than 40 atom% in total and at least one species of Co and Ni in an amount of 10-60 atom% in total.

4. The recording film as defined in Claim 2, which is made of an alloy containing at least one species of In, Bi, and Sn in an amount no less than 40 atom% in total and at least one species of Co and Ni in an amount of 10-60 atom% in total.
